# EUROPEAN PATENT SPECIFICATION

(11) **EP 3 846 591 B1**
(45) Date of publication and mention of the grant of the patent: **02.10.2024**
(21) Application number: 19219960.2
(22) Date of filing: 30.12.2019
(51) Int. Cl.: H05B 47/115, H05B 47/105, H05B 47/175

(54) **LIGHTING CONTROL**
BELEUCHTUNGSSTEUERUNG
COMMANDE D'ÉCLAIRAGE

(43) Date of publication of application: 07.07.2021
(73) Proprietor: Helvar Oy Ab, 02150 Espoo (FI)
(72) Inventor: AHOLA, Jukka, 02150 Espoo (FI); JUSLÉN, Henri, 02150 Espoo (FI); SEPPONEN, Laura, 02150 Espoo (FI); VESTERINEN, Matti, 02150 Espoo (FI)
(74) Representative: Berggren Oy

(56) References cited:
- WO-A1-2012/137046
- US-A1- 2018 132 335
- US-B2- 10 135 631

## Description

### TECHNICAL FIELD

The example and non-limiting embodiments of the present invention relate to analyzing and/or controlling operation of luminaires in a lighting network or a lighting arrangement.

### BACKGROUND

In many scenarios, a luminaire is provided as part of a lighting network or lighting arrangement that serves to illuminate a space or a plurality of spaces that are adjacent or otherwise linked to each other. On the other hand, a luminaire provided as part of the lighting arrangement may be at least partially controlled based on the presence of one or more persons in (a portion of) the space illuminated by the luminaire such that the lights are switched (and/or kept) on while presence of one or more persons in the space is detected and switched (and/or kept) off while no persons are detected in the space. In a typical solution in this regard, a control entity arranged for controlling at least some aspects of operation of the luminaire receives respective sensor signals from one or more passive infrared (PIR) sensors, determines occupancy or non-occupancy accordingly, and switches/keeps the lights on (at a normal light output level) in response to occupancy and switches/keeps the lights off (or at another low light output level) in response to non-occupancy.

Modern lighting control typically may further employ sensors of other type as further basis for the lighting control. As an example in this regard, the control entity in a luminaire receives respective sensor signals from one or more light sensors that are arranged in the space illuminated by the luminaire and adjusts the light output level of the luminaire at least partially based on observed light level indicated in the respective sensor signals.

Sensor signals such as ones conveying the occupancy information and/or the light level information provide valuable control information that, on one hand, enables the luminaire autonomously adjusting its light output such that sufficient light level is provided in the space in view of current occupancy of the space, while on the other hand enables energy conservation via reducing the light output of the luminaire when no occupancy in the space is detected and/or when the light level is sufficient even without substantial light output from the luminaire.

A traditional solution for lighting control that at least partially relies on the sensor information involves usage of a control entity provided with preprogrammed lighting control logic or lighting control algorithm that in the course of its operation reacts e.g. to respective sensor signals from a presence sensor and/or a light sensor in a predetermined manner. The lighting control logic and any (lighting control) parameters associated therewith are typically defined upon manufacturing the control entity and/or the luminaire via suitable default values that make the luminaire readily applicable in a wide variety of different operating environments. This may be especially useful e.g. in scenarios where the lighting arrangement involves a high number of luminaires, at least some of which are installed in physical locations that may make their manual configuration inconvenient or even (practically) impossible.

On the other hand, while usage of a lighting control logic relying on default values typically serves to ensure general applicability of the luminaire regardless of characteristics of its actual operating environment, quite naturally such preprogrammed lighting control logic is unable to account for actually encountered characteristics of the space in the course of operation of the luminaire in an optimized manner and in many occasions fine-tuning of the lighting control logic and/or lighting control parameters associated therewith may enable improved lighting performance in terms of providing a sufficient light level and/or avoiding excessive energy consumption.

Moreover, in a scenario where a lighting arrangement involves a high number of luminaires, some of which are installed in physical locations that are difficult (or even practically impossible) to reach, deriving a mapping between the luminaires installed in the space(s) the lighting arrangement serves to illuminate and the (planned) positions of the luminaires in the floorplan or in other visual representation of the space(s) may be tedious process that requires a lot of manual work and is prone to errors -while on the other hand such mapping is typically invaluable e.g. for subsequent maintenance operations of the lighting arrangement.

In related art, WO 2012/137046 A1 discloses a luminaire, a system and a method for adaptive illumination for illuminating a surrounding area with increased energetic efficiency, higher flexibility and improved user convenience, wherein the illumination is autonomously adapted according to changing requirements, wherein an activity sensor unit senses activity data in the surroundings of an illumination unit, a control unit generates a history of the activity data sensed for a predetermined time and adjusts operation characteristics of the illumination unit based on the history of activity data for illuminating the surroundings.

Further in related art, US 10,136,631 B2 discloses an equipment information acquirer that acquires, from electric equipment connected to a network, equipment type information indicating the type of electric equipment and at least one of environment information and operation information. A display controller causes the equipment type information acquired by the equipment information acquirer and correlation support information based on at least one of the environment information and the operation information to be displayed on a monitor after correlating the two with each other. The environment information indicates the environment of an area in which the electric equipment is installed. The operation information indicates the operating status of the electric equipment.

### SUMMARY

It is an object of the present invention to provide a technique that facilitates automatically or semiautomatically classifying and/or grouping a plurality of luminaires installed in their operating environment.

According to an example embodiment, a method for classifying a plurality of luminaires based on respective sensor data captured at respective locations of the plurality of luminaires that are arranged for illuminating a plurality of spaces is provided, the method comprising: obtaining the respective sensor data for the plurality of luminaires, the respective sensor data for each luminaire comprising respective one or more time series of sensor values that each represent a respective environmental characteristic at the respective location of said plurality of spaces as a function of time for a respective one of the plurality of luminaires; and assigning at least one of the plurality of luminaires into one of two or more predefined luminaire classes based on variation of the sensor values in the respective one or more time series of sensor values in the sensor data obtained for the respective luminaire, wherein said assignment comprises deriving, for each of the plurality of luminaires, based on at least one time series of sensor values included in the sensor data obtained for the respective luminaire, a respective change rate parameter that is descriptive of a change rate of sensor values in said at least one time series of sensor values, and assigning at least one of the plurality of luminaires into one of said two or more predefined luminaire classes based on the change rate parameter derived for the respective one of the plurality of luminaires, wherein said one or more time series of sensor values included in the sensor data obtained from the respective luminaire represents at least one of the following environmental characteristics: carbon dioxide level, respective volatile organic compound (VOC) level for one or more VOCs, humidity, air pressure.

According to another example embodiment, an apparatus comprising analysis means for classifying a plurality of luminaires based on respective sensor data captured at respective locations of the plurality of luminaires that are arranged for illuminating a plurality of spaces is provided, the analysis means arranged to: obtain the respective sensor data for the plurality of luminaires, the respective sensor data for each luminaire comprising respective one or more time series of sensor values that each represent a respective environmental characteristic at the respective location of said plurality of spaces as a function of time for a respective one of the plurality of luminaires; and assign at least one of the plurality of luminaires into one of two or more predefined luminaire classes based on variation of the sensor values in the respective one or more time series of sensor values in the sensor data obtained for the respective luminaire, wherein the analysis means is arranged to carry out said assigning via deriving, for each of the plurality of luminaires, based on at least one time series of sensor values included in the sensor data obtained for the respective luminaire, a respective change rate parameter that is descriptive of a change rate of sensor values in said at least one time series of sensor values, and assigning at least one of the plurality of luminaires into one of said two or more predefined luminaire classes based on the change rate parameter derived for the respective one of the plurality of luminaires, wherein said one or more time series of sensor values included in the sensor data obtained from the respective luminaire represents at least one of the following environmental characteristics: carbon dioxide level, respective volatile organic compound (VOC) level for one or more VOCs, humidity, air pressure.

According to another example embodiment, a computer program for classifying a plurality of luminaires based on respective sensor data captured at respective locations of the plurality of luminaires is provided, the computer program comprising computer readable program code configured to cause performing at least the method according to the example embodiment described in the foregoing when said program code is executed on a computing apparatus.

The computer program according to the above-described example embodiment may be embodied on a volatile or a non-volatile computer-readable record medium, for example as a computer program product comprising at least one computer readable non-transitory medium having the program code stored thereon, which, when executed by a computing apparatus, causes the computing apparatuses at least to perform the method according to the example embodiment described in the foregoing.

Some features of the invention are set forth in the appended claims. The invention relates to a method of classifying a plurality of luminaires according to claim 1, a computer program according to claim 11 and an apparatus according to claim 12. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some logical components of a lighting arrangement according to an example;
Figure 1B illustrates a plurality of lighting units of a lighting arrangement arranged for illumination of three adjacent spaces of an office building according to an example;
Figure 2 illustrates a block diagram of some components of a lighting unit according to an example;
Figure 3 illustrates a method according to an example;
Figure 4 illustrates a block diagram of some components of a lighting unit according to an example; and
Figure 5 illustrates a block diagram of some elements of an apparatus according to an example.

### DESCRIPTION OF SOME EMBODIMENTS

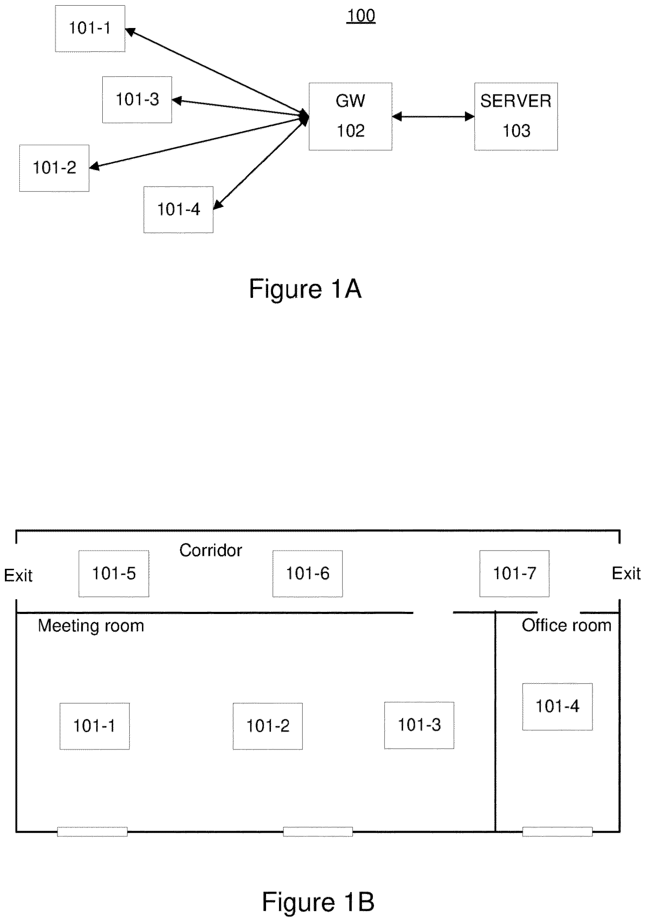

Figure 1A illustrates a block diagram of some logical components of a lighting arrangement 100 according to an example, including a plurality of lighting units 101-1, 101-2, ..., 101-4, a lighting control gateway 102 and a lighting control server 103. The lighting units 101-1 to 101-4 represent a plurality of (i.e. two or more) lighting units, where an individual lighting unit may be referred to via a reference number 101-k. The lighting units 101-k are communicatively coupled to the lighting control gateway 102 and to each other. The communicative coupling may be provided via wired or wireless communication medium, e.g. via a wireless communication network and/or via respective wireless links. The lighting units 101-k and the lighting control gateway 102 may be considered as nodes of a lighting network. The lighting control gateway 102 is communicatively coupled to the lighting control server 103, e.g. via a communication network such as the Internet. The lighting network is hence coupled to the lighting control server 103 via the lighting control gateway 102.

The lighting arrangement 100 may be arranged for illuminating respective portions or areas of a space or for illuminating respective one or more spaces that are adjacent or otherwise close to each other. As a few non-limiting examples, a space illuminated by the lighting arrangement 100 may comprise an indoor space of a building, such as a room (e.g. an habitable room, an office room, a meeting room, a classroom, an auditorium, etc.), an open space (an open office space, a lobby, a cafeteria, a retail store, etc.) or an intermediate space (such as a corridor, a stairway, etc.). Figure 1B illustrates lighting units 101-k of the lighting arrangement 100 arranged for illumination of three adjacent spaces of an office building according to a non-limiting example, which space in this example comprises a corridor, a meeting room and office room adjacent to each other and to the corridor with respective single doors linking the two rooms to the corridor. In this example, the lighting arrangement 100 comprises lighting units 101-1, 101-2 and 101-3, each arranged for illuminating a respective portion of the meeting room, a lighting unit 101-4 arranged for illuminating the office room and lighting units 101-5, 101-6 and 101-7, each arranged for illuminating a respective portion of the corridor.

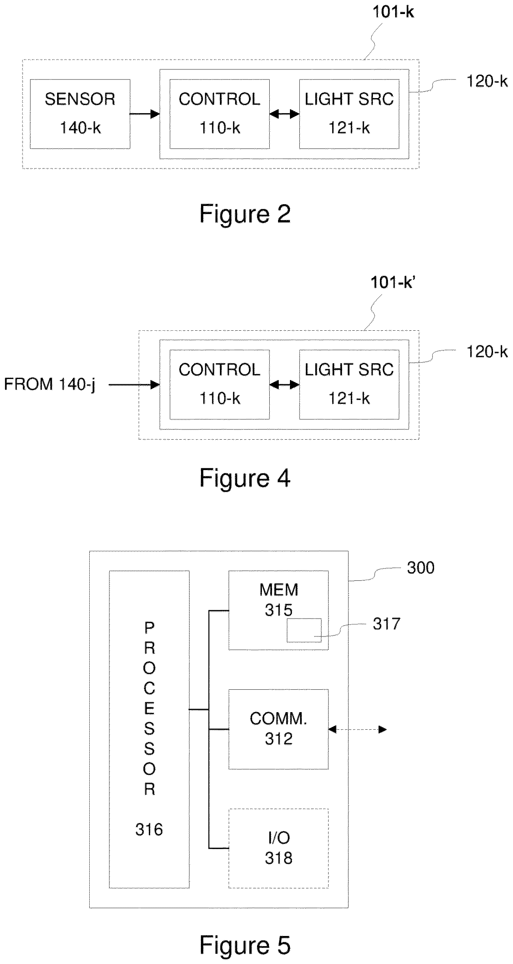

Figure 2 illustrates a block diagram of some logical components of a lighting unit 101-k according to an example. The lighting unit 101-k comprises a luminaire 120-k and a sensor unit 140-k that is coupled to the luminaire 120-k, e.g. via a respective wired connection. The luminaire 120-k comprises a lighting control device 110-k and at least one light source 121-k. The lighting control device 110-k comprises a lighting control means (e.g. a lighting control portion) for controlling the light output from the at least one light source 121-k, an adaptation means (e.g. an adaptation portion) for adjusting operation of the lighting control means and a communication means (e.g. a communication portion) for wired or wireless communication with other devices, e.g. with respective lighting control devices 110 of other luminaires 120 and/or with the lighting control gateway 102 (i.e. with other nodes of the lighting network). The lighting control device 110-k is arranged to control light output of the luminaire 120-k based at least in part on information received from the sensor unit 140-k and/or on information received from other luminaires 120 via the communication means.

In a non-limiting example, the at least one light source 121-k comprises one or more light emitting diodes (LEDs) and the lighting control device 110-k comprises or is provided as a LED driver device, whereas in another non-limiting example the at least one light source 121-k comprises one or more fluorescent lamps and the lighting control device 110-k comprises or is provided as an electronic ballast.

The sensor unit 140-k comprises a plurality of sensors, e.g. a plurality of separate sensors that conceptually constitute the sensor unit 140-k, a sensor assembly comprising the plurality of sensors, or a combination of one or more separate sensors and a sensor assembly comprising one or more sensors. Depending on the arrangement, the sensor unit 140-k may comprise one or more sensors that are provided as part of the luminaire 120-k (e.g. arranged in the same housing with the luminaire 120-k) and/or one or more sensor provided separately from (the housing of) the luminaire 120-k (e.g. in a separate sensor assembly and/or as separate sensors).

The plurality of sensors included in the sensor unit 140-k comprises sensors that are arranged for capturing respective sensor signals for provision to the control means in lighting control device 110-k. When referring to the luminaire unit 101-k or components thereof, these sensor signals may be referred to as local sensor signals due to their occurrence locally at the lighting unit 101-k. Each sensor signal is descriptive of a respective environmental characteristic in (the portion of) the space the luminaire 120-k serves to illuminate.

The plurality of sensors included in the sensor unit 140-k typically comprise an occupancy sensor for monitoring an occupancy status (e.g. one of occupancy or non-occupancy) in (the portion of) the space the luminaire 120-k serves to illuminate and a light sensor for observing ambient light level in (the portion of) the space the luminaire 120-k serves to illuminate. As non-limiting examples, the occupancy sensor may comprise a motion sensor such as passive infrared (PIR) sensor and/or the light sensor may comprise a photodetector such as a photodiode. The respective sensor signal from the occupancy sensor and/or the light sensor may be employed by the control means in the lighting control device 110-k for adjusting the light output of the at least one light source 121-k in dependence of the observed occupancy status and/or the observed ambient light level. The PIR sensor, however, is a non-limiting example of an applicable type of occupancy sensor, while other examples include a microwave radar, a (digital) camera, a thermographic camera, a microphone, a lidar, etc.

The plurality of sensors included in the sensor unit 140-k may further comprise, for example, one or more of the following sensors:
- A carbon dioxide (CO₂) sensor for measuring a CO₂ level in (the portion of) the space the luminaire 120-k serves to illuminate;
- One or more volatile organic compound (VOC) sensors for measuring respective levels of one or more VOCs in (the portion of) the space the luminaire 120-k serves to illuminate, for example a mixed VOC sensor arranged to simultaneously monitor respective levels of a plurality of VOC in the space;
- A humidity sensor for measuring humidity in (the portion of) the space the luminaire 120-k serves to illuminate;
- A temperature sensor for measuring temperature in (the portion of) the space the luminaire 120-k serves to illuminate;
- A vibration sensor for measuring (structural) vibrations in (the portion of) the space the luminaire 120-k serves to illuminate;
- A pressure sensor for measuring air pressure in (the portion of) the space the luminaire 120-k serves to illuminate;
- A microphone for capturing an audio signal that is descriptive of various audio characteristics (such as noise level, spectral characteristics, sound volume, etc.) in (the portion of) the space the luminaire 120-k serves to illuminate.

Referring back to the one or more VOC sensors described in the foregoing, the monitored VOCs may include one or more of following: particulate matter (PM) such as PM_{2.5} and/or PM₁₀, CO₂, carbon monoxide (CO), ozone (Os), nitrogen dioxide (NO₂), formaldehyde, total VOC concentration (TVOC).

Sensors of such type enable obtaining information on respective environmental characteristics in (the portion of) the space the luminaire 120-k serves to illuminate and hence the information obtained in the respective sensor signals may be applied in the lighting control device 110-k e.g. by the control means as further input for adjusting the light output from the luminaire 120-k.

The lighting control device 110-k, e.g. the lighting control means therein, may be preprogrammed (or otherwise provided) with a lighting control logic that defines the manner of controlling the light output from the luminaire 120-k at least in part in dependence of local sensor signals received at the lighting control device 110-k. The preprogrammed lighting control logic may define one or more pairs of a predefined triggering condition and a lighting control action to be carried out as a response to an occurrence of the predefined triggering condition. Each such pair may be referred to as a respective lighting control rule and hence the lighting control logic may comprise one or more lighting control rules. A lighting control rule may, optionally, have one or more lighting control parameters associated therewith. As non-limiting examples concerning lighting control rules, a lighting control rule may define a triggering condition that directly or indirectly pertains to the local occupancy sensor signal and/or a triggering condition that directly or indirectly pertains to the local light sensor signal. The light output control provided by the lighting control device 110-k may substantially follow from the lighting control means therein implementing one or more lighting control rules of the lighting control logic defined for the lighting control device 110-k. However, for brevity and clarity of the description, in the following lighting control actions arising from implementation of the lighting control logic are predominantly described as operations carried out by the lighting control device 110-k.

Non-limiting examples of lighting control rules comprise a lighting control rule that defines switching on the light output from the luminaire 120-k at a respective target light intensity *I*_{*tgt*,*k*} or otherwise adjust the light output from the luminaire 120-k from a lower light intensity to the target light intensity *I*_{*tgt*,*k*} as a response to a change in occupancy status from non-occupancy to occupancy, a lighting control rule that defines adjusting the light output from the luminaire 120-k to a respective stand-by light intensity *I*_{*off*,*k*} as a response to a change of occupancy status from occupancy to non-occupancy followed by a switch-off delay period *T*_{*off*,*k*} without a change of occupancy status from non-occupancy to occupancy, and/or a lighting control rule that defines adjusting the light output from the luminaire 120-k to a respective intermediate light intensity *I*_{*dim*,*k*} where (*I*_{*off*,*k*} < *I*_{*dim*,*k*} < *I*_{*tgt*,*k*}) as a response to a change of occupancy status from occupancy to non-occupancy followed by a dim-down delay period *T*_{*off*,*k*} where (*T*_{*dim*,*k*} < *T_{off,k}*) without a change of occupancy status from non-occupancy to occupancy.

The target light intensity *I*_{*tgt*,*k*}, the intermediate light intensity *I*_{*int*,*k*} and the stand-by light intensity *I*_{*off*,*k*} as well as the switch-off delay period *T*_{*off*,*k*}, the dim-down delay period *T*_{*dim*,*k*} described above serve as non-limiting examples of lighting control parameters that may be defined for the lighting control rules of the lighting control logic. The lighting control parameters associated with at least some of the lighting control rules of the preprogrammed lighting control logic may be initially set to respective default values. As described in the foregoing, these lighting control parameters may be initially set to respective default values that make the luminaire 120-k readily applicable in a wide variety of different operating environments and operating conditions. Such setting of the lighting control parameters may be carried out, for example, upon manufacturing the luminaire 120-k and/or the lighting control device 110-k of the luminaire 120-k. The lighting control logic, including the lighting control parameters, may be provided e.g. as program code stored in a memory in the lighting control device 110-k that will be executed by a processor in the lighting control device 110-k in the course of its operation.

As described in the foregoing, the lighting control device 110-k comprises the communication means to enable wired or wireless communication between the control device 110-k and other devices, e.g. the other nodes of the lighting network. As a non-limiting example, the communication means in the lighting control device 110-k may comprise a wireless transceiver that is capable of communicating with wireless transceivers in respective lighting control devices 110 of other luminaires 120 and with a wireless transceiver in the lighting control gateway 101 using a wireless communication technique or protocol. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy (LE), ZigBee, WLAN/Wi-Fi according to an IEEE 802.11 family of standards, etc. Further examples include infrared communications and other non-radio-based short-range communication techniques.

The choice of the communication technique and network topology for a specific embodiment of the lighting arrangement 100 may depend e.g. on the required communication range and/or requirements with respect to energy-efficiency of the communication means. As a concrete non-limiting example, the wireless communication may rely on a wireless mesh network model, for example on a mesh network according to the Bluetooth or Bluetooth LE Mesh networking protocol known in the art.

The lighting control device 110-k may apply the communication means to transmit status indication messages to the other nodes of the lighting network. Such a status indication message may comprise, in addition to information defined by the applied communication protocol, one or more status indications that are descriptive of current (or recent) operating characteristic of the luminaire 120-k and/or the lighting control device 110-k transmitting the status indication message. Conversely, the lighting control device 110-k receives status indication messages (and hence status indications) from other lighting control devices of the lighting arrangement 100. A status indication transmitted from the lighting control device 110-k may comprise an action indication that identifies a lighting control action taken by the lighting control device 110-k, e.g. switching on the light output from the luminaire 120-k (e.g. the target light intensity *I*_{*tgt*,*k*}), adjusting the light output from the luminaire 120-k to the intermediate light intensity *I*_{*dim*,*k*}, or adjusting the light output from the luminaire 120-k to the stand-by light intensity *I*_{*off*,}*ₖ.*

In the course of its operation, the lighting control device 110-k (e.g. the adaptation means) may be arranged to capture or derive respective sensor indications based on information carried in the sensor signals received from the sensor unit 140-k. The lighting control device 110-k may further store, in a memory therein, the sensor indications captured or derived based the information carried in the sensor signals received from the sensor unit 140-k. Such stored data may be referred to as history data and it may comprise, depending on the sensors included in the sensor unit 140-k, one or more of the following:
- A history of light level indications derived based on the local light sensor signal, stored e.g. at respective predefined time intervals and/or each time the observed light level changes by more than a predefined threshold.
- A history of occupancy indications derived based on the local occupancy sensor signal, stored e.g. at respective predefined time intervals and/or each time a change in occupancy status (from non-occupancy to occupancy or vice versa) is observed.
- A history of CO₂ level indications derived based on the local sensor signal received from a CO₂ sensor, stored e.g. at respective predefined time intervals.
- A history of VOC level indications derived based on the local sensor signal received from a respective VOC sensor, stored e.g. at respective predefined time intervals. In case the sensor unit 140-k includes respective VOC sensors for measuring respective levels of two or more VOCs, a dedicated series of history data is derived for each VOC. Non-limiting examples of considered VOCs include the following: PMS such as PM_{2.5} and/or PM₁₀, CO₂, CO, O₃, NO₂, formaldehyde, TVOC .
- A history of humidity level indications derived based on the local sensor signal received from a humidity sensor, stored e.g. at respective predefined time intervals.
- A history of temperature level indications derived based on the local sensor signal received from a temperature sensor, stored e.g. at respective predefined time intervals.
- A history of vibration level indications derived based on the local sensor signal received from a vibration sensor, stored e.g. at respective predefined time intervals.
- A history of air pressure level indications derived based on the local sensor signal received from a pressure sensor, stored e.g. at respective predefined time intervals.

In addition to the sensor data obtained or derived based on respective sensor signals received from the sensors of the sensor unit 140-k, the history data may further comprise auxiliary environmental information, such as a history of radio noise level measured at the communication means, stored e.g. at respective predefined time intervals and/or radio frequencies applied for communication (assuming the communication means relies on wireless communication between the nodes of the lighting network).

The history information stored in the memory may cover a predefined time period and the indications included in the history data may be stored together with respective timing information that indicates the capturing time of the respective piece of stored data. The timing information may comprise, for example, a respective timestamp that indicates the time with respect to a predefined reference time.

The lighting control device 110-k (e.g. the adaptation means) may be arranged to, in the course of its operation, make at least some of the sensor indications captured or derived based on the sensor signals received from the sensor unit 140-k available to the lighting control gateway 102. This may involve using the communication means in the lighting control device 110-k to transmit the sensor indications in one or more sensor indication messages to the lighting control gateway 102 over the wired or wireless communication network or communication link. Each sensor indication message comprises, in addition to information defined by the applied communication protocol, at least one sensor indication, possibly together with an indication of the underlying sensor type and timing information that defines capturing time of the at least one sensor indication. A sensor indication message may comprise multiple sensor indications that may be captured or derived based on sensor signals of different types.

In an example, the lighting control device 110-k (e.g. the adaptation means therein) is arranged to transmit a sensor indication captured or derived based on a given sensor signal each time a new sensor indication based on the given sensor signal is derived in the lighting control device 110-k. In another example, the lighting control device 110-k transmits one or more sensor indications (pertaining to one or more sensor signals) according to predefined schedule, e.g. at predefined time intervals. A sensor indication message conveying the at least one sensor indication may further comprise a device identifier assigned to the lighting control device 110-k (or to the luminaire 120-k) that has transmitted the at least one sensor indication, in other words an identification of the luminaire 120-k to which the sensor indication(s) pertain. The device identifier may comprise, for example, an address, a serial number, a name, etc. assigned to the lighting control device 110-k (or that assigned to the luminaire 120-k) or to the communication means therein.

The lighting control gateway 102 may comprise a computer device provided with a communication means that is able to communicate with the respective communication means in the lighting control devices 110 of the luminaires 120. The lighting control gateway 102 is to be construed as a logical entity that may be provided as an entity (physically) separate from the luminaires 120 of the lighting network or it may be provided as part of one of the luminaires 120 or luminaire units 101 of the lighting network. The lighting control gateway 102 is arranged to receive respective sensor indication messages from a plurality of lighting control devices 110 (and hence from the plurality of luminaires 120). The lighting control gateway 102 may be arranged to store the sensor indications received in the sensor indication messages in a memory provided in the lighting control gateway 102. Such stored data may be referred to as composite history data and it comprises respective time series of sensor indications for one or more sensor types originating from the plurality of luminaires 120. The lighting control gateway 102 may be further arranged to provide the sensor indications stored in the composite history data to the lighting control server 103 for storage and analysis therein. The provision of the composite history data from the lighting control gateway 102 to the lighting control server 103 may involve, for example, the lighting control gateway 102 transmitting sensor indications included in the composite history data in one or more composite sensor indication messages, the lighting control gateway 102 uploading the composite history data to the lighting control server 103 or the lighting control server 103 downloading the composite history data from the lighting control gateway 102.

The lighting control server 103 is a logical entity that may be provided by one or more computer devices that may be arranged to provide a cloud computing service. The lighting control server 103 comprises an analysis means (e.g. an analysis portion) for processing the sensor indications received from the lighting control gateway 102. In this regard, the analysis means may be arranged to store the sensor indications received from the lighting control gateway 102 into a memory in the lighting control server 103 and to carry out an analysis of the sensor indications received from the lighting control gateway 102. The sensor indications originating from the luminaire 120-k may be arranged by the analysis means into sensor data for the luminaire 120-k that comprises (reconstructed) time series of sensor indications originally captured at the lighting control device 110-k based on the sensor signals received from the sensor unit 140-k, whereas similar arrangement of sensor indications into respective sensor data may be provided for sensor indications received from other luminaires 120 of the lighting arrangement 100. The sensor indications may be also referred to as sensor values or sensor readings.

The respective sensor data for the luminaire 120-k hence comprises at least a respective first time series of sensor values that represents a first environmental characteristic as a function of time for the luminaire 120-k. The sensor data for the luminaire 120-k may further comprise respective one or more further time series of sensor values, each representing a respective environmental characteristic that is different from the first environmental characteristics and from each other. Hence, the sensor data may further comprise a respective second time series of sensor values that represents a second environmental characteristic as a function of time, a respective third time series of sensor values that represents a third environmental characteristic as a function of time etc. depending on the number and types of sensors available in the sensor unit 140-k. Herein, the possible second, third and any further environmental characteristics are different from each other.

Along similar lines, the respective sensor data obtained (at the analysis means) for the other luminaires 120 comprises at least a respective first time series of sensor indications that represents the first environmental characteristic as a function of time for the respective one of the other luminaires 120 and it may further comprise respective one or more further time series of sensor values, each representing the respective environmental characteristic. In other words, the respective first time series of sensor values in the respective sensor data for each of the luminaires 120 pertains to the same environmental characteristics, thereby enabling comparison of that environmental characteristic and changes thereof observed at the location of the luminaire 120-k to those observed at respective locations of the other luminaires 120 of the lighting arrangement 100. The same applies for possible second, third, etc. time series of sensor values that may be included in the respective sensor data for each of the luminaires 120.

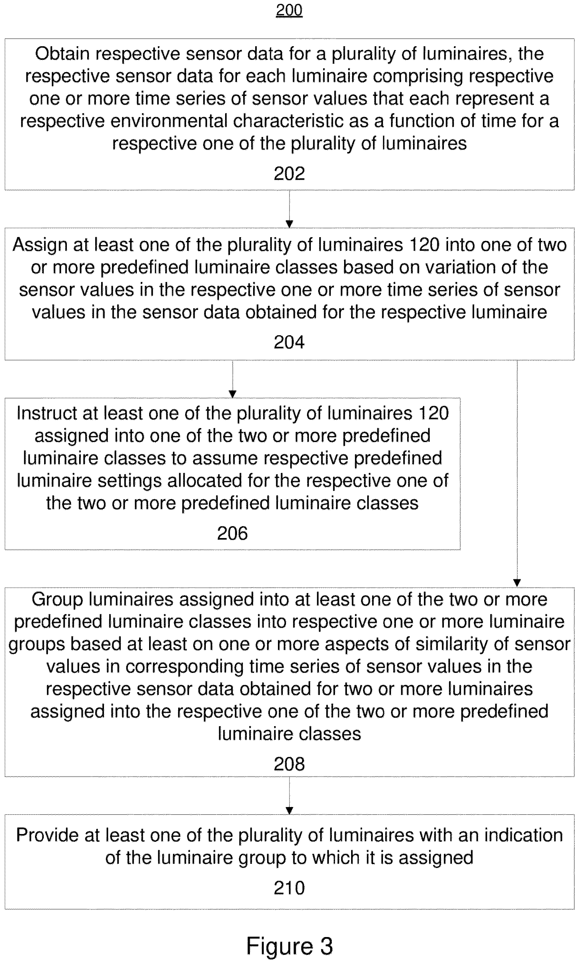

The analysis serves to classify the plurality of luminaires 120 based on the respective sensor data captured at respective locations of the plurality of luminaires 120 and the analysis may be carried out, for example, in accordance with a method 200 illustrated by the flowchart depicted in Figure 3. The analysis is carried out in the course of operation of the lighting arrangement 100, the analysis thereby serving to classify the plurality of luminaires 120 operated in their actual locations in the space(s) they serve to illuminate. In this regard, the analysis may be carried out substantially continuously or according to a predefined schedule (e.g. at predefined time intervals).

The analysis according to the method 200 may comprise analyzing the respective sensor data obtained for the plurality of luminaires 120 for a time period of interest, which may be referred to as an analysis period or as an analysis window. Hence, the analysis may consider a respective sub-series that corresponds to the analysis window in each time series of sensor values of interest across the respective sensor data obtained for the plurality of luminaires 120. The operations described with references to blocks 202 to 210 pertaining to the method 200 may be varied or complemented in a number of ways, for example as described in the foregoing and/or in the following with references to elements of the lighting arrangement 100.

The method 200 commences by obtaining the respective sensor data for the plurality of luminaires 120, the respective sensor data for each luminaire 120 comprising at least a respective first time series of sensor values that represents the first environmental characteristic as a function of time for a respective one of the plurality of luminaires 120, as indicated in block 202. In this regard, the aspect of obtaining the respective sensor data for the plurality of luminaires 120 is described in the foregoing. The method 200 further comprises assigning at least one of the plurality of luminaires 120 into one of two or more predefined luminaire classes based on variation of the sensor values in the respective sensor data obtained for the respective luminaire 120, as indicated in block 204. The assignment of the luminaires into the two or more luminaire classes may be also referred to as classification of luminaires or luminaire classification.

Referring back to operations described with references to block 204, the assignment that relies on variation of the sensor values may comprise deriving, for each luminaire 120 under consideration and for at least one time series of sensor values available in the sensor data provided for the respective one of the luminaires 120, respective one or more change parameters that are descriptive of a respective aspect of variation of the sensor values in the respective time series of sensor values, and assigning at least one of the luminaires 120 into one of the two or more predefined luminaire classes based on the change parameters derived for the respective one of the luminaires 120.

The one or more change parameters comprises a change rate parameter that is descriptive of a change rate of sensor values in the respective time series. Consequently, the assignment of at least one of the luminaires 120 into one of the two or more predefined luminaire classes comprises deriving a respective change rate parameter for each luminaire under consideration based on at least one time series of sensor data available in the sensor data provided for the respective one of the luminaires 120, and assigning at least one of the luminaires 120 into one of the two or more predefined luminaire classes at least based on the change rate parameter(s) derived for the respective one of the luminaires 120.

Still referring to the example pertaining to the change rate parameter, the change-rate-parameter based assignment with respect to a luminaire 120-k may comprise one or both of the following:
- assigning the luminaire 120-k into a first predefined luminaire class in response to the change rate parameter derived therefor exceeding a first change rate threshold,
- assigning the luminaire 120-k into a second predefined luminaire class in response to the change rate parameter derived therefor failing to exceed a second change rate threshold that is lower than or equal to the first change rate threshold.

As an example, the first and second predefined luminaire classes may represent luminaires operated in spaces of different types, e.g. such that the first predefined luminaire class represents luminaires operated in an enclosed space such as a room, which may be an habitable room, an office room, a meeting room, a classroom, etc. (where the environmental characteristics represented by the sensor values under consideration typically change relatively fast) and the second predefined luminaire class represents luminaires operated in an open space such as an open office space, a lobby, a corridor, a stairway, a cafeteria, etc. (where the environmental characteristics represented by the sensor values under consideration typically change relatively slowly).

In an example, the first and second change rate thresholds may be set to the same value, thereby defining exactly two predefined luminaire classes and, consequently, resulting in classification of each luminaire either into the first luminaire class or into the second luminaire class based on the change rate derived therefor. In another example, the second change rate threshold is set to a smaller value than the first change rate threshold, thereby implicitly providing a third luminaire class where the change rate derived for the luminaire under consideration falls between the first and second thresholds. Such third luminaire class may represent, for example, a third predefined luminaire class or it may represent luminaires for which the change-rate-based classification does not provide unambiguous classification into one of the first and second luminaire classes. In some examples, the third luminaire class may be further divided into two or more further classes by respective predefined change rate thresholds.

The first and second (and possible further) change rate thresholds are set separately for each time series of sensor values included in the respective sensor data provided for the luminaires 120, in dependence of the environmental characteristics represented by the respective time series. According to an example, the first and second (and possible further) change rate thresholds for a time series representing an environmental characteristic of a given type may be defined based on the sensor values obtained for the respective time series of sensor values over the plurality of the luminaires 120. As an example in this regard, a respective threshold value pertaining to given time series (and hence to a given environmental characteristic) may be defined based on one or more statistical measures, such as an average, a median and/or standard deviation, computed based on sensor values of the respective time series across the plurality of luminaires 120. According to another example, the first and second (and possible further) change rate thresholds for a time series representing an environmental characteristic of a given type may be defined as respective predefined thresholds, for example, based on experimental data (e.g. sensor values) recorded using a sensor observing the environmental characteristic of the given type in operating conditions that correspond to first and second (and possible further) luminaire classes. As an example, the sensor data for a given luminaire 120-k may include a first time series of sensor values that represents the CO₂ level as a function of time for the given luminaire 120-k and a second time series of sensor values that represents a VOC level as a function of time for the given luminaire 120-k and, consequently, the first and second (and possible further) change thresholds for the first time series of sensor values are defined in view of expected CO₂ levels for the luminaires in the first and second luminaire classes whereas the first and second (and possible further) change thresholds for the second time series of sensor values are defined in view of expected VOC levels for the luminaires in the first and second luminaire classes.

As another example of such change parameters, the one or more change parameters may comprise a value range parameter that is descriptive of a dynamic range of sensor values in the respective time series. Consequently, the assignment of at least one of the luminaires 120 into one of the two or more predefined luminaire classes may comprise deriving a respective value range parameter for each luminaire under consideration based on at least one time series of sensor data available in the sensor data provided for the respective one of the luminaires 120, and assigning at least one of the luminaires 120 into one of the two or more predefined luminaire classes at least based on the value range parameter(s) derived for the respective one of the luminaires 120.

Still referring to the example pertaining to the value range parameter, the change-rate-parameter based assignment for a luminaire 120-k may comprise one or both of the following:
- assigning the luminaire 120-k into the first predefined luminaire class in response to the value range parameter(s) derived therefor exceeding a first predefined value range threshold,
- assigning a luminaire 120 into the second predefined luminaire class in response to the value range parameter(s) derived therefor failing to exceed a second predefined value range threshold that is lower than or equal to the first predefined change rate threshold.

The considerations with respect to the types of luminaires represented by the first and second luminaire classes discussed in the foregoing with references to the change-rate-based classification apply to the value-range-based classification as well: in enclosed spaces the environmental characteristics represented by the sensor values under consideration typically have a relatively wide value range, whereas in open spaces they typically have a relatively narrow value range). Moreover, the considerations with respect to selection and/or definition of the first and second (and possible further) change rate thresholds provided in the foregoing for the change rate parameter apply to the value-range-based classification as well, *mutatis mutandis.*

In an example, multiple change parameters may be applied as basis for the classification of the luminaires 120. Such change parameters may include, for example, respective one or more change rate parameters derived for each luminaire 120 under consideration, and/or respective one or more value range parameters derived for each luminaire 120 under consideration, possibly together with respective one or more change parameters of other type derived for each luminaire 120 under consideration. In this scenario there may be respective two or more change parameters derived for each of the luminaires 120, and the luminaires 120 may be assigned into one of the two or more predefined luminaire classes based on the respective two or more parameters derived therefor. The two or more change parameters may be applied in the classification of a given luminaire 120-k into one of the two or more predefined luminaire classes, for example, in the following manner:
- Separately pre-assign the given luminaire 120-k into one of the two or more predefined luminaire classes based on each of the two or more change parameters derived therefor, and
- Assign the given luminaire 120-k into a given luminaire class in case at least a predefined number of the two or more change parameters defined therefor result in pre-assigning the given luminaire 120-k into the given luminaire class. As examples in this regard, the assignment into the given luminaires class may require that all change parameters derived for the given luminaire 120 result in pre-assigning the given luminaire 120-k into the given luminaire class or that more than 50 % of the pre-assignments derived for the given luminaire 120 result in pre-assigning the given luminaire 120-k into the given luminaire class.

Hence, an example of the threshold-based luminaire classification generalizes into an approach where the given luminaire 120-k is assigned into a first predefined luminaire class in response to at least a predefined number of change parameters derived therefor exceeding a respective first change threshold and where the given luminaire 120-k is assigned into a second predefined luminaire class in response to at least said predefined number of change parameters defined therefor failing to exceed a respective second change threshold, which second change threshold is lower than or equal to the respective first change threshold.

In another example, instead of relying on a threshold based approach, the classification of the luminaires 120 into the two or more predefined luminaire classes may comprise applying a clustering technique known in the art to assign the luminaires 120 into the two or more predefined luminaire classes based on the respective one or more change parameters derived therefor. In this regard, the change rate parameters applied in the classification may include respective one or more change rate parameters derived for each luminaire 120 under consideration and/or respective one or more value range parameters derived for each luminaire 120 under consideration, possibly together with respective one or more change parameters of other type derived for each luminaire 120 under consideration.

A clustering-based luminaire classification may comprise applying a clustering model to pre-assign the plurality of luminaires 120 into two or more clusters based on the respective one or more change parameters defined therefor and assigning one or more of the clusters into respective ones of the two or more predefined luminaire classes in dependence of the respective one or more change parameters derived for the luminaires pre-assigned into the respective clusters. Non-limiting examples of applicable clustering models include hierarchical clustering, centroid-based clustering, distribution-based clustering, density-based clustering, etc.

As an example, the assignment of the one or more of the clusters into respective ones of the two or more predefined luminaire classes may comprise assigning a first cluster that includes luminaires for which the change parameters derived therefor indicate relatively small change in sensor values over time (e.g. a low change rate and/or a small dynamic range) into a first predefined luminaire class and assigning a second cluster that includes luminaires for which the change parameters indicate relatively large change in sensor values over time (e.g. a high change rate and/or a large dynamic range) into a second predefined luminaire class. Herein, as described in the foregoing in an example pertaining to the threshold-based classification, the first predefined luminaire class may represent luminaires operated in an enclosed space and the second predefined luminaire class may represent luminaires operated in an open space. Consequently, each luminaire class resulting from the classification procedure may consist of respective luminaires 120 for which the changes in sensor values are found to be different from those assigned to other luminaire classes.

Referring back to the flowchart of Figure 3, the method 200 may, optionally, further comprise instructing at least one of the plurality of luminaires 120 assigned into one of the two or more predefined luminaire classes to assume respective predefined luminaire settings allocated for the respective one of the two or more predefined luminaire classes, as indicated in block 206. The predefined luminaire settings may comprise, for example, respective luminaire-class-specific values for one or more lighting control parameters applied in the lighting control logic applied by the lighting control device 110 for controlling the light output from the luminaire 120.

As an example, the aspect of instructing at least one of the luminaires 120 to apply luminaire settings in accordance with its classification into one of the two or more predefined luminaire classes may involve transmitting, via the lighting control gateway 102, a command or indication in this regard to the respective one of the luminaires 120-k or otherwise controlling the respective one of the luminaires 120-k to apply luminaire settings according to classification carried out by the analysis means in the lighting control server 103. As a non-limiting example, the luminaire 120-k may have the respective luminaire settings allocated for each of the two or more luminaire classes stored therein and the luminaire 120-k (e.g. the adaptation means therein) may be arranged to adopt, upon reception of the command or indication in this regard, the luminaire settings allocated for the luminaire class indicated in the command or indication received from the lighting control server 103 (via the lighting control gateway 102).

Still referring to the flowchart of Figure 3, the method 200 may, optionally, further comprise grouping luminaires 120 assigned into at least one of the two or more predefined luminaire classes into respective one or more luminaire groups based at least on similarity of sensor values in corresponding time series of sensor values in the respective sensor data obtained for two or more luminaires 120 assigned into the respective one of the two or more predefined luminaire classes, as indicated in block 208. The grouping of luminaires assigned into at least one of the two or more predefined luminaire classes may be applied for various purposes that pertain to controlling or fine-tuning operation of the lighting system 100 and/or to providing a user or maintenance personnel with information concerning mapping between the luminaires 120 installed in the space(s) they serve to illuminate and their positions on a floorplan of the space(s). A more detailed example concerning such mapping is provided in the following.

The method 200 may, optionally, further comprise providing at least one of the luminaires 120 with an indication of the luminaire group to which it is assigned, as indicated in block 210. As an example of providing such an indication, the analysis means in the lighting control server 103 may be arranged to transmit, via the lighting control gateway 102 to a luminaire 120-k, an indication comprising a group identifier of the group to which the luminaire 120-k is assigned and/or identifiers of one or more other luminaires assigned to the same group with the luminaire 120-k. Consequently, the adaptation means in the lighting control device 110-k of the luminaire 120-k may adjust the lighting control logic (applied by the lighting control means) in the lighting control device 110-k of the luminaire 120-k e.g. such that it follows at least some lighting control actions taken by other luminaires in the same luminaire group based on the status indications received therefrom. In an example in this regard, the lighting control logic in the luminaire 120-k may be adjusted such that light output from the luminaire 120-k is switched on or adjusted to the stand-by light intensity *I*_{*off*,*k*} in response to receiving a status indication indicating another luminaire 120-j assigned to the same luminaire group with the luminaire 120-k having switched on its light output or having adjusted its light output to the stand-by light intensity *I*_{*off*,*j*}, respectively.

Referring back to operations described with references to block 208, the corresponding time series of sensor values in the respective sensor data obtained for two or more luminaires 120 is the one that represents the same environmental characteristic. As an example, the grouping may be based on the respective first time series of sensor values that represents the first environmental characteristic as a function of time in respective sensor data obtained for two or more luminaires 120 classified into the same one of the two or more predefined luminaire classes. In another example, the grouping may be based on the respective first time series of sensor values that represents the first environmental characteristic as a function of time and on the respective second time series of sensor values that represents the second environmental characteristic as a function of time in respective sensor data obtained for two or more luminaires 120 classified into the same one of the two or more predefined luminaire classes, whereas in further examples this generalizes into any number of time series of sensor values representing a respective environmental characteristic obtained for two or more luminaires 120 classified into the same one of the two or more predefined luminaire classes.

The grouping of luminaires in accordance with operations described with reference to block 208, the grouping may comprise grouping luminaires 120 assigned into one of the two or more predefined luminaire classes into said respective one or more luminaire groups based at least on timing of one or more changes in the sensor values in the corresponding time series of sensor values in respective sensor data obtained for luminaires assigned into the respective one of the two or more predefined luminaire classes. As non-limiting examples in this regard, the grouping may consider one or more changes in sensor values that occur at respective predefined time instants within the analysis window (e.g. at respective predefined time delays from the beginning of the analysis window) or any changes within the analysis window that exhibit a change rate exceeding a predefined threshold.

According to an example, the timing-based grouping may consider a first time series of sensor values (that represent the first environmental characteristic) obtained for a first luminaire 120-k that is assigned to a given luminaire class and a first time series of sensor values (that also represent the first environmental characteristic) obtained for a second luminaire 120-j that is assigned to the given luminaire class and carrying out the one or more of the following:
- assigning the first luminaire 120-k and the second luminaire 120-j into a same luminaire group in response to the one or more changes in sensor values considered in the analysis occurring substantially at the same time in the first time series of sensor values obtained for the first luminaire 120-k and in the first time series of sensor values obtained for the second luminaire 120-j,
- assigning the first luminaire 120-k and the second luminaire 120-j into separate luminaire groups in response to the one or more changes in sensor values considered in the analysis not occurring substantially at the same time in the first time series of sensor data obtained for the first luminaire 120-k and in the first time series of sensor data obtained for the second luminaire 120-j.

The example above considers only the respective first series of sensor values obtained for the first luminaire 120-k and for the second luminaire 120-j. In another example, the grouping may further consider the respective second series of sensor values obtained for the first luminaire 120-k and for the second luminaire 120-j. In such a scenario, the assignment of the first and second luminaires 120-k, 120-j into the same luminaire groups or into separate luminaire groups becomes valid only if the respective assignments carried out based on the first time series of sensor values and based on the second time series of sensor values result in similar grouping with respect the first and second luminaires 120-k, 120-j. In a further example, the grouping may consider any number of time series available in the respective sensor data obtained for the first and second luminaires 120-k, 120-j and the grouping becomes valid only if at least a predefined number (or a predefined percentage) of respective assignments carried out based on respective time series of sensor values result in similar grouping with respect the first and second luminaires 120-k, 120-j.

Still referring to the grouping of luminaires in accordance with operations described with reference to block 208, the grouping may comprise grouping luminaires 120 assigned into one of the two or more predefined luminaire classes into said respective one or more luminaire groups based at least on similarity of sensor values in at one or more time instants in the corresponding time series of sensor values in respective sensor data obtained for luminaires assigned into the respective one of the two or more predefined luminaire classes. As non-limiting example in this regard, the grouping may consider one or more sensor values that occur at respective predefined time instants within the analysis window (e.g. at respective predefined time delays from the beginning of the analysis window).

According to an example, the value-based grouping may consider a first time series of sensor values (that represent the first environmental characteristic) obtained for a first luminaire 120-k that is assigned to a given luminaire class and a first time series of sensor values (that also represent the first environmental characteristic) obtained for a second luminaire 120-j that is assigned to the given luminaire class, deriving a difference measure based on sensor values at said one or more time instants in the first time series of sensor values obtained for said first luminaire 120-k and corresponding sensor values at said one or more time instants in the first time series of sensor values obtained for said second luminaire 120-j, and carrying out the one or more of the following:
- assigning the first luminaire 120-k and the second luminaire 120-j into a same luminaire group in response to said difference measure being smaller than a similarity threshold,
- assigning the first luminaire 120-k and the second luminaire 120-j into separate luminaire groups in response to said difference measure exceeding the similarity threshold.

The example above considers only the respective first series of sensor values obtained for the first luminaire 120-k and for the second luminaire 120-j. In another example, the grouping may further consider the respective second series of sensor values obtained for the first luminaire 120-k and for the second luminaire 120-j and possibly also one or more further time series of sensor values obtained for the first and second luminaires 120-k, 120-j. Along the lines described in the foregoing in context of the timing-based groping, the grouping may become valid only if at least a predefined number (or a predefined percentage) of respective assignments carried out based on respective time series of sensor values result in similar grouping with respect the first and second luminaires 120-k, 120-j.

In an example, the grouping of luminaires within a luminaire class may comprise multiple aspects of similarity, e.g. the simultaneousness of timing of changes in the corresponding time series of sensor values obtained for two or more luminaires 120 assigned into the same luminaire class and/or the similarity of sensor values in the corresponding time series of sensor values obtained for two or more luminaires 120 assigned into the same luminaire class described in the foregoing. The threshold-based grouping may result in different grouping with respect to the first luminaire 120-k and the second luminaire 120-j when considering different aspect of similarity in the sensor values obtained therefor (e.g. the simultaneousness of timing of changes and similarity of sensor values) and/or when considering different time series of sensor values obtained therefor (e.g. the first time series and the second time series of sensor values). To account for such a scenario, e.g. the following procedure may be applied for grouping the luminaires 120-k and 120-j:
- Separately pre-assign the first luminaire 120-k and the second luminaire 120-j into a same luminaire group or into separate luminaire groups based on each aspect of similarity under consideration; and
- Assign the first luminaire 120-k and the second luminaire 120-j into the same luminaire group in case at least a predefined number of aspects of similarity under consideration result in pre-assigning the luminaires 120-k and 120-j into the same luminaire group (and otherwise assigning the luminaires 120-k and 120-j into separate luminaire groups). As examples in this regard, the assignment into the same luminaires group may require that all aspects of similarity under consideration result in pre-assigning the luminaires 120-k and 120-k into the same luminaire group or that more than 50 % of the pre-assignments derived for the luminaires 120-k and 120-j result in assigning these two luminaires into the same luminaire group.

In another example, instead of relying of a threshold based approach, the grouping of the luminaires 120 into the two or more luminaire groups may comprise applying a clustering technique known in the art to further assign the luminaires 120 assigned into a given luminaire class into two or more luminaire groups. Such clustering may consider respective one or more aspects of similarity derived for each luminaire assigned into the luminaire class under consideration, e.g. respective similarity of timing of changes in sensor values in the corresponding time series obtained for the luminaires under consideration, derived based on respective one or more time series of sensor values obtained for each luminaire 120 under consideration, and/or respective similarity of sensor values in the corresponding time series obtained for the luminaires under consideration, derived based on respective one or more time series of sensor values obtained for each luminaire 120 under consideration. In this regard, the similarity of timing of changes and/or the similarity of sensor values may be assessed as described in the foregoing.

A clustering-based luminaire grouping may comprise applying a clustering model to pre-assign the luminaires under consideration into two or more clusters based on the respective one or more change aspects of similarity and assigning one or more of the clusters into respective two or more luminaire groups. Non-limiting examples of applicable clustering models include the ones referred to in the foregoing, i.e. hierarchical clustering, centroid-based clustering, distribution-based clustering, density-based clustering, etc. Consequently, each luminaire group resulting from the grouping procedure may consist of luminaires 120 for which the changes in sensor values have been found to occur substantially simultaneously and/or for which substantially the sensor values have been obtained.

As described in the foregoing, the classification of luminaires into the two or more predefined luminaire classes and further grouping of luminaires assigned into at least one of the luminaire classes into one or more luminaire groups may be applied to facilitate mapping between the luminaires 120 installed in the spaces they serve to illuminate and respective spaces illustrated in a floorplan. Such mapping may be enabled, for example, via a graphical user interface (GUI) of a user device (e.g. a mobile phone, a tablet computer, a laptop computer, a desktop computer, etc.) that is coupled to the lighting control server 103 via the communication network. As a non-limiting example, such a mapping procedure may include the following steps:
- displaying, via the GUI, the floorplan of the spaces the plurality of luminaires 120 serves to illuminate, where the floorplan that shows designated luminaire locations in the spaces;
- displaying, via the GUI, for the plurality of luminaires 120, respective luminaire information obtained and/or derived for a respective one of the plurality of luminaires 120, including at least the device identifier, luminaire class and luminaire group obtained/derived for the respective one of the plurality of luminaires 120;
- receiving, via the GUI, for at least some of the plurality of luminaires 120, respective user input that defines mapping between a luminaire 120-k and a space shown on the floorplan; and
- storing, in the memory of the lighting control sever 103, the user-input-defined mapping between at least some of the plurality of luminaires 120 and the respective spaces on the floorplan.

As an example, the mapping procedure outlined above may be applicable for defining the mapping between the luminaire units 101-1 to 101-7 (and hence the luminaires 120-1 to 120-7) and their designated locations on the floorplan shown in the example of Figure 1B. In particular, the classification and/or grouping of the luminaires 120-1 to 120-7 may result in a first luminaire group that includes the luminaires 120-1, 120-2 and 120-3, a second luminaire group that includes the luminaire 120-4 and a third luminaire group that includes the luminaires 120-5, 120-6 and 120-7. Moreover, the luminaires 120-1 to 120-4 may be ones assigned to a first predefined luminaire class that represents luminaires operated in an enclosed space and the luminaires 120-5 to 120-7 may be ones assigned to a second predefined luminaire class that represents luminaires operated in an enclosed space. Consequently, the classification and grouping of the luminaires 120 may provide information that conveniently enables the mapping between the plurality of luminaires 120 and the designated luminaire locations on the floorplan.

In many scenarios mapping the plurality of luminaires 120 to respective spaces of the floorplan already provides a sufficient mapping accuracy. In case further mapping accuracy is necessary or desirable, the mapping between the luminaires 120 and the respective spaces of the floorplan derived based on the luminaire classification and luminaire grouping that relies on the history data comprising the sensor indications captured at the plurality of luminaires 120 may be further elaborated based further information pertaining to at least some of the luminaires 120, which may enable mapping between one or more luminaires 120 installed in a given space and their locations within the given space. Such further information may be displayed as part of the luminaire information in the mapping procedure outlined above to facilitate user-input-based mapping. Non-limiting examples of such elaborated mapping include the following.
- The analysis means may further obtain or derive information concerning respective installation heights of luminaires 120 mapped to a given space, for example based on a radar (e.g. a microwave radar) provided in the sensor unit 140-k. Consequently, the height information may enable distinguishing between luminaires in the given space based on their manner of installation therein (e.g. recessed, suspended, wall-mounted, etc.).
- The analysis means may further obtain information concerning respective driver types applied for luminaires 120 mapped to a given space, e.g. the respective powers provided by the drivers applied for the luminaires 120 mapped to the given space. Consequently, driver type information (driver power and/or other information) may indicate or imply a luminaire type that may enable distinguishing between luminaires in the given space.
- The analysis means may further consider the time series of sensor values representing temperature obtained for luminaires 120 mapped to a given space separately from the classification of block 204 and from the grouping of block 208: the temperature indicated for a luminaire 120 that has the respective sensor unit 140 installed in the same housing with the luminaire 120 typically rises faster than the temperature indicated for another luminaire 120 that has the respective sensor unit 140 installed outside the housing of the luminaire 120. Consequently, the temperature information may enable distinguishing between luminaires having their sensor units 140 installed within or outside the housing of the respective luminaire 120 in the given space.
- Another approach for making further use of the time series of sensor values representing temperature obtained for luminaires 120 mapped to a given space involves observing spatial relationship between the luminaires in the given space 120 and windows possibly present in the given space: the temperature indicated for a luminaire 120 installed close to a window typically rises faster than the temperature indicated for another luminaire installed further away from the window (e.g. due to sunlight received through the window). Consequently, the temperature information may enable distinguishing between luminaires based on their position with respect to the window in the given space.
- The analysis means may further obtain information concerning lighting scenes applied for luminaires 120 mapped to a given space. Such information may provide further indication of the respective roles of the luminaires in the given space with respect to each other: as an example, a lighting scene may define that one or more luminaires 120 closest to a screen in a meeting room or an auditorium may be dimmed (e.g. switch off or adjusted to a respective lower light intensity level) while the lighting scene may define that one or more other luminaires 120 in the given space may be applied at their respective normal (e.g. higher) light intensity levels. Consequently, the information concerning differences in respective light intensity levels applied for the luminaires in the given space according to the lighting scene may enable distinguishing between the luminaires of the given space.

The mapping between the luminaires 120 of the lighting arrangement 100 and the spaces they serve to illuminate may enable the lighting control server 103 to at least partially control HVAC (heating, ventilation and air conditioning) functions available in said spaces (e.g. via an application programmable interface (API) provided by the HVAC system) in dependence of the sensor values obtained for the luminaires 120 mapped to said spaces or to provide an underlying HVAC system with information that enables improved control of HVAC functions available in said spaces.

As a non-limiting example in this regard, the sensor indications provided from the plurality of luminaires 120 (via the lighting control gateway 102) to the lighting control server 103 further comprises respective time series of occupancy indications obtained or derived at the respective one of the luminaires 120. Consequently, the respective sensor data obtained (by the analysis means) at the lighting control server 103 for a given luminaire 120-k may further include a respective time series of occupancy indications pertaining to the given luminaire 120-k. Further assuming the respective sensor data for the given luminaire 120-k to include a respective time series that represents the CO₂ level as a function of time (i.e. a time series of CO₂ levels), the analysis means may be arranged to derive, based on the time series of occupancy indications and the time series of CO₂ levels obtained for the luminaire 120-k, a conversion function that is descriptive of the relationship between the number of occupancy indications per time unit and an increase rate of CO₂ level during the time unit.

As an example, such conversion function is directly applicable for estimating the expected increase in the CO₂ level based on the time series of occupancy indications obtained for the luminaire 120-k and it can be also expected to enable deriving a reliable estimate of the expected increase in the CO₂ level based on respective time series of occupancy indications obtained for any luminaire that is assigned in the same luminaire group with the luminaire 120-k. Consequently, e.g. the lighting control server 103 may be arranged to control ventilation or air conditioning in the space for which the luminaire 120-k (or any other luminaire 120 assigned to the same luminaire group) serves to illuminate based on the respective time series of occupancy indications received from the luminaire 120-k and/or from one or more other luminaires assigned in the same luminaire group with the luminaire 120-k and/or to issue an indication concerning expected increase in the CO₂ level in said space (which, for example in a scenario where said space is a meeting room, may result in scheduling a break to avoid participant fatigue due to high CO₂ level).

In another example, the conversion function may be applied with a scheduling application that is employed to handle reservations to a space that serves as a meeting room or as a corresponding space: experimental data may be employed to derive a mapping between the number of person in a space and the number of occupancy indications per time unit arising from said space. Consequently, when making a reservation to said space, the mapping function may be applied to convert the expected number of participants into the corresponding number of occupancy indications per time unit, which in turn may be further converted by the conversion function into the expected increase in the CO₂ level. With this information, the scheduling application is able to estimate the time period after which the CO₂ level in said space reaches a predefined maximum CO₂ level, which time period may be indicated as the recommended maximum duration of a meeting in said space with the indicated number of participants.

In yet another example, the conversion function may be applied in the opposite manner, i.e. to estimate the number of occupancy indications based on the observed increase in the CO₂ level, which may be derived based on the respective time series of CO₂ levels obtained for the luminaire 120-k and/or for one or more other luminaires 120 assigned in the same luminaire group with the luminaire 120-k. In this regard, the estimated number of occupancy indications (per time unit) may be further converted into the estimated number of persons in the space the luminaires 120-k and/or one or more other luminaires 120 assigned in the same luminaire group with the luminaire 120-k serve to illuminate. Consequently, in case such procedure of estimating the number of persons in said space indicates a change in (e.g. long-term average of) the estimated number of persons in said space, this may serve as indication of changes having occurred in one or more spaces the lighting arrangement 100 serves to illuminate and/or as indication of a malfunction in one or more luminaire units 101 or luminaires 120 of the lighting arrangement 100.

The examples described in the foregoing assumed the lighting arrangement 100 to include the plurality of lighting units 101-k of the kind illustrated by the block diagram of Figure 2. In a variation of the lighting arrangement 100, some of the lighting units may comprise a lighting unit 101-k', illustrated by a block diagram of Figure 4. The lighting unit 101-k' comprises consists of the luminaire 120-k that comprises the lighting control device 110-k and the at least one light source 121-k. Hence, the difference to the lighting unit 101-k is that the lighting unit 101-k' does not include a dedicated sensor unit but receives the sensor signals from a sensor unit of another luminaire unit, e.g. from the sensor unit 140-j of the luminaire unit 101-j.

In another variation of the lighting arrangement 100, the plurality of the luminaires 120 may be coupled to the lighting control server 103 via a plurality of (i.e. two or more) lighting control gateways 102. In such a variation of the lighting arrangement 100, each lighting control gateway 102 receives respective sensor indication messages from one or more luminaires 120 coupled thereto, stores the sensor indications received in these sensor indication messages as respective composite history data in a memory provided therein, and provides the sensor indications stored in the respective composite history data to the lighting control server 103 for (storage and) analysis therein.

In yet another variation of the lighting arrangement 100, the dedicated lighting control server 103 may be omitted and the corresponding functionality may be provided by the lighting control gateway 102. In such a variation of the lighting arrangement 100, the operations described with references to the analysis means in the lighting control server 103 may be carried out by an analysis means provided in the lighting control gateway 102 instead, *mutatis mutandis.* In other words, in such a variation of the lighting arrangement 100 the lighting control gateway 102 at least conceptually operates (also) as the lighting control server 103.

In yet another variation of the lighting arrangement 100, the both the dedicated lighting control server 103 and the lighting control gateway(s) 102 may be omitted and the corresponding functionality may be provided by one of the luminaire units 101, 101', e.g. by the lighting control device 110-kof the luminaire unit 101-k or 101-k'. In such a variation of the lighting arrangement 100, the operations described with references to the analysis means in the lighting control server 103 may be carried out by an analysis means provided in the lighting control device 110-k instead, *mutatis mutandis.* In other words, in such a variation of the lighting arrangement 100 the lighting control device 110-k at least conceptually operates (also) as the lighting control server 103.

Figure 4 illustrates a block diagram of some components of an exemplifying apparatus 300. The apparatus 300 may comprise further components, elements or portions that are not depicted in Figure 4. The apparatus 300 may be referred to as a computing apparatus and it may be employed e.g. in implementing at least some of the operations, procedures and/or functions described in the foregoing in context of the analysis means.

The apparatus 300 comprises a processor 316 and a memory 315 for storing data and computer program code 317. The memory 315 and a portion of the computer program code 317 stored therein may be further arranged to, with the processor 316, to implement at least some of the operations, procedures and/or functions described in the foregoing in context of the analysis means.

The apparatus 300 comprises a communication portion 312 for communication with other devices. The communication portion 312 comprises at least one communication apparatus that enables wired or wireless communication with other apparatuses. A communication apparatus of the communication portion 312 may also be referred to as a respective communication means.

The apparatus 300 may, optionally, further comprise one or more user I/O (input/output) components 318 that may be arranged, possibly together with the processor 316 and a portion of the computer program code 317, to provide a user interface for receiving input from a user of the apparatus 300 and/or providing output to the user of the apparatus 300 to control at least some aspects of operation of the lighting control device 110-k implemented by the apparatus 300. The user I/O components 318 may comprise hardware components such as a display, a touchscreen, a touchpad, an arrangement of one or more keys or buttons, etc. The user I/O components 318 may be also referred to as peripherals. The processor 316 may be arranged to control operation of the apparatus 300 e.g. in accordance with a portion of the computer program code 317 and possibly further in accordance with the user input received via the user I/O components 318 and/or in accordance with information received via the communication portion 312.

Although the processor 316 is depicted as a single component, it may be implemented as one or more separate processing components. Similarly, although the memory 315 is depicted as a single component, it may be implemented as one or more separate components, some or all of which may be integrated/removable and/or may provide permanent / semi-permanent/ dynamic/cached storage.

The computer program code 317 stored in the memory 315, may comprise computer-executable instructions that control one or more aspects of operation of the apparatus 300 when loaded into the processor 316. As an example, the computer-executable instructions may be provided as one or more sequences of one or more instructions. The processor 316 is able to load and execute the computer program code 317 by reading the one or more sequences of one or more instructions included therein from the memory 315. The one or more sequences of one or more instructions may be configured to, when executed by the processor 316, cause the apparatus 300 to carry out at least some of the operations, procedures and/or functions described in the foregoing in context of the analysis means. Hence, the apparatus 300 may comprise at least one processor 316 and at least one memory 315 including the computer program code 317 for one or more programs, the at least one memory 315 and the computer program code 317 configured to, with the at least one processor 316, cause the apparatus 300 to perform at least some of the operations, procedures and/or functions described in the foregoing in context of the analysis means.

The computer programs stored in the memory 315 may be provided e.g. as a respective computer program product comprising at least one computer-readable non-transitory medium having the computer program code 317 stored thereon, the computer program code, when executed by the apparatus 400, causes the apparatus 300 at least to perform at least some of the operations, procedures and/or functions described in the foregoing in context of the analysis means. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program. Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

In the present disclosure, although functions have been described with reference to certain features, those functions may be performable by other features whether described or not.

## Claims

1. A method (200) for classifying a plurality of luminaires (120) based on respective sensor data captured at respective locations of the plurality of luminaires (120) that are arranged for illuminating a plurality of spaces, the method (200) comprising:
obtaining (202) the respective sensor data for the plurality of luminaires (120), the respective sensor data for each luminaire (120) comprising respective one or more time series of sensor values that each represent a respective environmental characteristic at the respective location of said plurality of spaces as a function of time for a respective one of the plurality of luminaires (120),
assigning (204) at least one of the plurality of luminaires (120) into one of two or more predefined luminaire classes based on variation of the sensor values in the respective one or more time series of sensor values in the sensor data obtained for the respective luminaire (120)
**characterized in that** said assigning (204) comprises
deriving, for each of the plurality of luminaires (120), based on at least one time series of sensor values included in the sensor data obtained for the respective luminaire (120-k), a respective change rate parameter that is descriptive of a change rate of sensor values in said at least one time series of sensor values, and
assigning at least one of the plurality of luminaires (120) into one of said two or more predefined luminaire classes based on the change rate parameter derived for the respective one of the plurality of luminaires (120),
wherein said one or more time series of sensor values included in the sensor data obtained from the respective luminaire (120-k) represents at least one of the following environmental characteristics: carbon dioxide level, respective volatile organic compound, VOC, level for one or more VOCs, humidity, air pressure.

2. A method according to claim 1, wherein said assigning comprises one or more of the following: assigning a luminaire of the plurality of luminaires into the first predefined luminaire class in response to the change rate parameter derived therefor exceeding a first change rate threshold, assigning a luminaire of the plurality of luminaires into the second predefined luminaire class in response to the change rate parameter defined therefor failing to exceed a respective second change rate threshold that is lower than or equal to the first change rate threshold.

3. A method according to claim 1, wherein said assigning comprises:
applying a clustering model to pre-assign the plurality of luminaires into two or more clusters based on the respective change rate parameters defined therefor; and
assigning one or more of the clusters into respective ones of the two or more predefined luminaire classes in dependence of the respective change rate parameters derived for the luminaires pre-assigned into respective ones of said one or more clusters

4. A method according to any of claims 1 to 3, further comprising instructing (206) said at least one of the plurality of luminaires (120) assigned into one of the two or more predefined luminaire classes to assume respective predefined luminaire settings allocated for the respective one of the two or more predefined luminaire classes

5. A method according to any of claims 1 to 4, wherein the sensor data for each luminaire further comprises at least a respective first time series of sensor values that represent a first environmental characteristic as a function time and a respective second time series of sensor values that represents a second environmental characteristic as a function of time for the respective one of the plurality of luminaires, wherein the second environmental characteristic is different from the first environmental characteristic.

6. A method according to any of claims 1 to 5, further comprising grouping luminaires assigned into at least one of the two or more predefined luminaire classes into respective one or more luminaire groups based at least on one or more aspects of similarity of sensor values in corresponding time series of sensor values in the respective sensor data obtained for two or more luminaires assigned into the respective one of the two or more predefined luminaire classes

7. A method according to claim 6, wherein said one or more aspects of similarity comprise simultaneousness of timing of one or more changes in the sensor values in the corresponding time series of sensor values in respective sensor data obtained for the two or more luminaires assigned into the respective one of the two or more predefined luminaire classes

8. A method according to claim 6 or 7, wherein said one or more aspects of similarity comprise similarity of sensor values at one or more time instants in the corresponding time series of sensor values in respective sensor data obtained for the two or more luminaires assigned into the respective one of the two or more predefined luminaire classes

9. A method according to any of claims 6 to 8, wherein said grouping comprises obtaining respective one or more time series of sensor values for a first luminaire assigned into said at least one of the two or more predefined luminaire classes, obtaining respective one or more time series of sensor values for a second luminaire assigned into said at least one of the two or more predefined luminaire classes, deriving a respective aspect of similarity based on sensor values of the first time series of sensor values obtained for said first luminaire and corresponding sensor values of the first time series of sensor values obtained for said second luminaire, and carrying out one or more of the following:
assigning the first and second luminaires into a same luminaire group in response to at least a predefined number of said aspects of similarity indicating similarity between the respective time series of sensor values obtained for the first luminaire and the corresponding time series of sensor values obtained for the second luminaire,
assigning the first and second luminaires into separate luminaire groups in response to less than said predefined number of said aspects of similarity indicating similarity between the respective time series of sensor values obtained for the first luminaire and the corresponding time series of sensor values obtained for the second luminaire.

10. A method according to any of claims 6 to 8, wherein said grouping comprises, for luminaires assigned into at least one of the two or more predefined luminaire classes:
applying a clustering model to pre-assign luminaires assigned into a respective luminaire class into respective one or more clusters based on said one or more aspects of similarity, and
assigning luminaires assigned into said respective one or more clusters into respective one or more luminaire groups

11. A computer program (317) for controlling light output from a luminaire (120-k), the computer program (317) comprising computer readable program code configured to cause performing at least the method according to any of claims 1 to 10 when said program code is executed on one or more computing apparatuses (300).

12. An apparatus (102, 103, 110-k, 300) comprising analysis means for classifying a plurality of luminaires (120) based on respective sensor data captured at respective locations of the plurality of luminaires (120) that are arranged for illuminating a plurality of spaces, the analysis means arranged to:
obtain the respective sensor data for the plurality of luminaires (120), the respective sensor data for each luminaire (120) comprising respective one or more time series of sensor values that each represent a respective environmental characteristic at the respective location of said plurality of spaces as a function of time for a respective one of the plurality of luminaires (120),
assign at least one of the plurality of luminaires (120) into one of two or more predefined luminaire classes based on variation of the sensor values in the respective one or more time series of sensor values in the sensor data obtained for the respective luminaire (120),
**characterized in that** the analysis means is arranged to carry out said assigning via
deriving, for each of the plurality of luminaires (120), based on at least one time series of sensor values included in the sensor data obtained for the respective luminaire (120-k), a respective change rate parameter that is descriptive of a change rate of sensor values in said at least one time series of sensor values, and
assigning at least one of the plurality of luminaires (120) into one of said two or more predefined luminaire classes based on the change rate parameter derived for the respective one of the plurality of luminaires (120),
wherein said one or more time series of sensor values included in the sensor data obtained from the respective luminaire (120-k) represents at least one of the following environmental characteristics: carbon dioxide level, respective volatile organic compound, VOC, level for one or more VOCs, humidity, air pressure.

## Patentansprüche

1. Verfahren (200) zum Klassifizieren einer Vielzahl von Leuchten (120) auf der Grundlage von jeweiligen Sensordaten, aufgenommen an jeweiligen Orten von der Vielzahl von Leuchten (120), die zum Beleuchten einer Vielzahl von Räumen eingerichtet sind, wobei das Verfahren (200) Folgendes umfasst:
Erhalten (202) der jeweiligen Sensordaten für die Vielzahl von Leuchten (120), wobei die jeweiligen Sensordaten für jede Leuchte (120) eine oder mehrere jeweilige Zeitreihen von Sensorwerten, die jeweils ein jeweiliges Umgebungscharakteristikum an dem jeweiligen Ort von der Vielzahl von Räumen als eine Funktion der Zeit für eine jeweilige aus der Vielzahl von Leuchten (120) repräsentieren, umfassen,
Zuweisen (204) mindestens einer aus der Vielzahl von Leuchten (120) in eine von zwei oder mehr vordefinierten Leuchtenklassen auf der Grundlage von Variation der Sensorwerte in der einen oder den mehreren jeweiligen Zeitreihen von Sensorwerten in den Sensordaten, die für die jeweilige Leuchte (120) erhalten wurden,
**dadurch gekennzeichnet, dass** das Zuweisen (204) umfasst:
Ableiten, für jede aus der Vielzahl von Leuchten (120), auf der Grundlage mindestens einer Zeitreihe von Sensorwerten, enthalten in den Sensordaten, die für die jeweilige Leuchte (120-k) erhalten wurden, eines jeweiligen Änderungsratenparameters, der eine Änderungsrate von Sensorwerten in der mindestens einen Zeitreihe von Sensorwerten beschreibt, und
Zuweisen von mindestens einer aus der Vielzahl von Leuchten (120) in eine der zwei oder mehr vordefinierten Leuchtenklassen auf der Grundlage des für die jeweilige aus der Vielzahl von Leuchten (120) abgeleiteten Änderungsratenparameters,
wobei die eine oder die mehreren Zeitreihen von Sensorwerten, enthalten in den Sensordaten, die von der jeweiligen Leuchte (120-k) erhalten wurden, mindestens eines der folgenden Umgebungscharakteristika repräsentieren: Kohlendioxidniveau, Niveau jeweiliger flüchtiger organischer Verbindungen bzw. VOC-Niveau für ein oder mehrere VOCs, Feuchtigkeit, Luftdruck.

2. Verfahren nach Anspruch 1, wobei das Zuweisen eines oder mehrere der Folgenden umfasst:
Zuweisen einer Leuchte aus der Vielzahl von Leuchten in die erste vordefinierte Leuchtenklasse als Reaktion darauf, dass der dafür abgeleitete Änderungsratenparameter eine erste Änderungsratenschwelle übersteigt,
Zuweisen einer Leuchte aus der Vielzahl von Leuchten in die zweite vordefinierte Leuchtenklasse als Reaktion darauf, dass der dafür definierte Änderungsratenparameter eine jeweilige zweite Änderungsratenschwelle, die kleiner oder gleich der ersten Änderungsratenschwelle ist, nicht übersteigt.

3. Verfahren nach Anspruch 1, wobei das Zuweisen Folgendes umfasst:
Anwenden eines Clustering-Modells zum Vorzuweisen der Vielzahl von Leuchten in zwei oder mehr Cluster auf der Grundlage der jeweiligen dafür definierten Änderungsratenparameter; und
Zuweisen eines oder mehrerer der Cluster in jeweilige der zwei oder mehr vordefinierten Leuchtenklassen in Abhängigkeit von den jeweiligen für die Leuchten abgeleiteten Änderungsratenparametern, die in jeweilige des einen oder der mehreren Cluster vorzugewiesen wurden.

4. Verfahren nach einem der Ansprüche 1 bis 3,
ferner umfassend Anweisen (206) der mindestens einen aus der Vielzahl von Leuchten (120), die in eine der zwei oder mehr vordefinierten Leuchtenklassen zugewiesen wurden, zum Einnehmen jeweiliger vordefinierter Leuchteneinstellungen, die der jeweiligen aus den zwei oder mehr vordefinierten Leuchtenklassen zugeteilt wurden.

5. Verfahren nach einem der Ansprüche 1 bis 4,
wobei die Sensordaten für jede Leuchte ferner mindestens eine jeweilige erste Zeitreihe von Sensorwerten, die ein erstes Umgebungscharakteristikum als eine Funktion der Zeit repräsentieren, und eine jeweilige zweite Zeitreihe von Sensorwerten, die ein zweites Umgebungscharakteristikum als eine Funktion der Zeit repräsentieren, für die jeweilige aus der Vielzahl von Leuchten umfassen, wobei sich das zweite Umgebungscharakteristikum von dem ersten Umgebungscharakteristikum unterscheidet.

6. Verfahren nach einem der Ansprüche 1 bis 5,
ferner umfassend Gruppieren von Leuchten, die in mindestens eine der zwei oder mehr vordefinierten Leuchtenklassen zugewiesen wurden, in eine oder mehrere jeweilige Leuchtengruppen, auf der Grundlage von mindestens einem oder mehreren Ähnlichkeitsaspekten von Sensorwerten in korrespondierenden Zeitreihen von Sensorwerten in den jeweiligen Sensordaten, die für zwei oder mehr Leuchten, zugewiesen in die jeweilige der zwei oder mehr vordefinierten Leuchtenklassen, erhalten wurden.

7. Verfahren nach Anspruch 6, wobei der eine oder die mehreren Ähnlichkeitsaspekte Gleichzeitigkeit von einer oder mehreren Änderungen der Sensorwerte in den korrespondierenden Zeitreihen von Sensorwerten in jeweiligen Sensordaten, die für die zwei oder mehr Leuchten, in die jeweilige der zwei oder mehr vordefinierten Leuchtenklassen zugewiesen, erhalten wurden, umfassen.

8. Verfahren nach Anspruch 6 oder 7, wobei der eine oder die mehreren Ähnlichkeitsaspekte Ähnlichkeit von Sensorwerten zu einem oder mehreren Zeitpunkten in den korrespondierenden Zeitreihen von Sensorwerten in jeweiligen Sensordaten, die für die zwei oder mehr Leuchten, in die jeweilige der zwei oder mehr vordefinierten Leuchtenklassen zugewiesen, erhalten wurden, umfassen.

9. Verfahren nach einem der Ansprüche 6 bis 8, wobei das Gruppieren Folgendes umfasst: Erhalten einer oder mehrerer jeweiliger Zeitreihen von Sensorwerten für eine erste Leuchte, zugewiesen in die mindestens eine der zwei oder der mehreren vordefinierten Leuchtenklassen, Erhalten einer oder mehrerer jeweiliger Zeitreihen von Sensorwerten für eine zweite Leuchte, zugewiesen in die mindestens eine der zwei oder der mehreren vordefinierten Leuchtenklassen, Ableiten eines jeweiligen Ähnlichkeitsaspekts auf der Grundlage von Sensorwerten der ersten Zeitreihe von Sensorwerten, erhalten für die erste Leuchte, und korrespondieren Sensorwerten der ersten Zeitreihe von Sensorwerten, erhalten für die zweite Leuchte, und Ausführen von einem oder mehreren der Folgenden:
Zuweisen der ersten und der zweiten Leuchte in dieselbe Leuchtengruppe als Reaktion auf mindestens eine vordefinierte Anzahl der Ähnlichkeitsaspekte, die die Ähnlichkeit zwischen der jeweiligen Zeitreihe von Sensorwerten, erhalten für die erste Leuchte, und der korrespondierenden Zeitreihe, erhalten für die zweite Leuchte, angeben,
Zuweisen der ersten und der zweiten Leuchte in separate Leuchtengruppen als Reaktion auf weniger als die vordefinierte Anzahl der Ähnlichkeitsaspekte, die die Ähnlichkeit zwischen der jeweiligen Zeitreihe von Sensorwerten, erhalten für die erste Leuchte, und der korrespondierenden Zeitreihe, erhalten für die zweite Leuchte, angeben.

10. Verfahren nach einem der Ansprüche 6 bis 8, wobei das Gruppieren, für in mindestens eine der zwei oder mehr vordefinierten Leuchtenklasse zugewiesenen Leuchten, umfasst:
Anwenden eines Clustering-Modells zum Vorzuweisen von Leuchten, die in eine jeweilige Leuchtenklasse zugewiesen wurden, in einen oder mehrere jeweilige Cluster auf der Grundlage des einen oder der mehreren Ähnlichkeitsaspekte, und
Zuweisen von Leuchten, die in den einen oder die mehreren jeweiligen Cluster zugewiesen wurden, in eine oder mehrere jeweilige Leuchtengruppen.

11. Computerprogramm (317) zum Steuern von Lichtausgabe von einer Leuchte (120-k), wobei das Computerprogramm (317) computerlesbaren Programmcode umfasst, der dafür ausgelegt ist, zu bewirken, dass mindestens das Verfahren nach einem der Ansprüche 1 bis 10, durchgeführt wird, wenn der Programmcode auf einer oder mehreren Recheneinrichtungen (300) ausgeführt wird.

12. Einrichtung (102, 103, 110-k, 300), umfassend ein Analysemittel zum Klassifizieren einer Vielzahl von Leuchten (120) auf der Grundlage von jeweiligen Sensordaten, die an jeweiligen Orten von der Vielzahl von Leuchten (120), die zum Beleuchten einer Vielzahl von Räumen eingerichtet sind, aufgenommen wurden, wobei das Analysemittel eingerichtet ist, zum:
Erhalten der jeweiligen Sensordaten für die Vielzahl von Leuchten (120), wobei die jeweiligen Sensordaten für jede Leuchte (120) eine oder mehrere jeweilige Zeitreihen von Sensorwerten, die jeweils ein jeweiliges Umgebungscharakteristikum an dem jeweiligen Ort von der Vielzahl von Räumen als eine Funktion der Zeit für eine jeweilige aus der Vielzahl von Leuchten (120) repräsentieren, umfassen,
Zuweisen mindestens einer aus der Vielzahl von Leuchten (120) in eine von zwei oder mehr vordefinierten Leuchtenklassen auf der Grundlage von Variation der Sensorwerte in der einen oder den mehreren jeweiligen Zeitreihen von Sensorwerten in den Sensordaten, die für die jeweilige Leuchte (120) erhalten wurden,
**dadurch gekennzeichnet, dass** das Analysemittel eingerichtet ist zum Ausführen des Zuweisens über
Ableiten, für jede aus der Vielzahl von Leuchten (120), auf der Grundlage mindestens einer Zeitreihe von Sensorwerten, enthalten in den Sensordaten, die für die jeweilige Leuchte (120-k) erhalten wurden, eines jeweiligen Änderungsratenparameters, der eine Änderungsrate von Sensorwerten in der mindestens einen Zeitreihe von Sensorwerten beschreibt, und
Zuweisen von mindestens einer aus der Vielzahl von Leuchten (120) in eine der zwei oder mehr vordefinierten Leuchtenklassen auf der Grundlage des für die jeweilige aus der Vielzahl von Leuchten (120) abgeleiteten Änderungsratenparameters,
wobei die eine oder die mehreren Zeitreihen von Sensorwerten, enthalten in den Sensordaten, die von der jeweiligen Leuchte (120-k) erhalten wurden, mindestens eines der folgenden Umgebungscharakteristika repräsentieren: Kohlendioxidniveau, Niveau jeweiliger flüchtiger organischer Verbindungen bzw. VOC-Niveau für ein oder mehrere VOCs, Feuchtigkeit, Luftdruck.

## Revendications

1. Procédé pour classer une pluralité de luminaires (120) en se basant sur les données de capteur respectives capturées aux emplacements respectifs de la pluralité de luminaires (120) qui sont disposés de façon à éclairer une pluralité d'espaces, ce procédé (200) comprenant :
l'obtention (202) des données de capteur respectives pour la pluralité de luminaires (120), ces données de capteur respectives pour chaque luminaire (120) comprenant une ou plusieurs séries chronologiques de valeurs de capteur respectives qui représentent chacune une caractéristique environnementale respective à l'emplacement respectif de ladite pluralité d'espaces comme une fonction de temps pour un luminaire respectif parmi la pluralité de luminaires (120),
l'affectation (204) d'au moins un luminaire parmi la pluralité de luminaires (120) à une de deux classes prédéfinies de luminaires ou plus en se basant sur la variation des valeurs de capteur dans la ou les séries chronologiques respectives de valeurs de capteur dans les données de capteur obtenues pour le luminaire respectif (120),
**caractérisé en ce que** ladite affectation (204) comprend : la déduction, pour chaque luminaire parmi la pluralité de luminaires (120), en se basant sur au moins une série chronologique de valeurs de capteur comprises dans les données de capteur obtenues pour le luminaire respectif (120-k), d'un paramètre de taux de changement respectif qui est descriptif d'un taux de changement des valeurs de capteur dans ladite au moins une série chronologique de valeurs de capteur, et
l'affectation d'au moins un luminaire parmi la pluralité de luminaires (120) à une desdites deux classes prédéfinies de luminaires ou plus en se basant sur le paramètre de taux de changement déduit pour le luminaire respectif parmi la pluralité de luminaires (120),
lesdites une ou plusieurs séries chronologiques de valeurs de capteur comprises dans les données de capteur obtenues à partir du luminaire respectif (120-k) représentant au moins une des caractéristiques environnementales suivantes : le niveau de dioxyde de carbone, le composé organique volatil respectif, VOC, le niveau pour un ou plusieurs composés VOC, l'humidité, la pression de l'air.

2. Procédé selon la revendication 1, dans lequel ladite affectation comprend une ou plusieurs des opérations suivantes :
l'affectation d'un luminaire parmi la pluralité de luminaires à la première classe prédéfinie de luminaires en réponse au fait que le paramètre de taux de changement déduit à cette fin dépasse un premier seuil de taux de changement,
l'affectation d'un luminaire parmi la pluralité de luminaires à la deuxième classe prédéfinie de luminaires en réponse au fait que le paramètre de taux de changement défini à cette fin ne dépasse pas un deuxième seuil de taux de changement respectif qui est plus bas que, ou égal au premier seuil de taux de changement.

3. Procédé selon la revendication 1, dans lequel ladite affectation comprend :
l'affectation d'un modèle de mise en grappes afin de préaffecter la pluralité de luminaires à deux grappes ou plus en se basant sur les paramètres de taux de changement respectifs définis à cette fin ; et
l'affectation d'une ou de plusieurs de ces grappes à des classes respectives des deux classes prédéfinies de luminaires ou plus en fonction des paramètres de taux de changement respectifs déduits pour les luminaires préaffectés à des grappes respectives desdites une ou plusieurs grappes.

4. Procédé selon l'une quelconque des revendications 1 à 3,
comprenant en outre la demande (206) audit au moins un luminaire parmi la pluralité de luminaires (120) affectés à une des deux classes prédéfinies de luminaires ou plus d'adopter les réglages de luminaires prédéfinis respectifs attribués pour la classe respective des deux classes prédéfinies de luminaires ou plus.

5. Procédé selon l'une quelconque des revendications 1 à 4,
dans lequel les données de capteur pour chaque luminaire comprennent en outre au moins une première série chronologique respective de valeurs de capteur qui représentent une première caractéristique environnementale comme une fonction de temps et une deuxième série chronologique de valeurs de capteur qui représentent une deuxième caractéristique environnementale comme une fonction de temps pour le luminaire respectif parmi la pluralité de luminaires, cette deuxième caractéristique environnementale étant différente de la première caractéristique environnementale.

6. Procédé selon l'une quelconque des revendications 1 à 5,
comprenant en outre le regroupement des luminaires affectés à au moins une des deux classes prédéfinies de luminaires ou plus dans un ou plusieurs groupes respectifs de luminaires en se basant au moins sur un ou plusieurs aspects de similarité de valeurs de capteur dans les séries chronologiques correspondantes de valeurs de capteur dans les données de capteur respectives obtenues pour deux luminaires ou plus affectés à la classe respective des deux classes prédéfinies de luminaires ou plus.

7. Procédé selon la revendication 6, dans lequel lesdits un ou plusieurs aspects de similarité comprennent la simultanéité du moment d'un ou de plusieurs changements dans les valeurs de capteur dans la série chronologique correspondante de valeurs de capteur dans les données de capteur respectives obtenues pour les deux luminaires ou plus affectés à la classe respective parmi les deux classes prédéfinies de luminaires ou plus.

8. Procédé selon la revendication 6 ou 7, dans lequel lesdits un ou plusieurs aspects de similarité comprennent la similarité de valeurs de capteur à un ou plusieurs instants de temps dans la série chronologique correspondante de valeurs de capteur dans les données de capteur respectives obtenues pour les deux luminaires ou plus affectés à la classe respective des deux classes prédéfinies de luminaires ou plus.

9. Procédé selon l'une quelconque des revendications 6 à 8, dans lequel ledit regroupement comprend l'obtention d'une ou de plusieurs séries chronologiques de valeurs de capteur pour un premier luminaire affecté à ladite au moins une classe des deux classes prédéfinies de luminaires ou plus, l'obtention d'une ou de plusieurs séries chronologiques respectives de valeurs de capteur pour un deuxième luminaire affecté à ladite au moins une classe des deux classes prédéfinies de luminaires ou plus, la déduction d'un aspect de similarité respectif en se basant sur les valeurs de capteur de la première série chronologique de valeurs de capteur obtenues pour ledit premier luminaire et sur les valeurs de capteur correspondantes de la première série chronologique de valeurs de capteur obtenues pour ledit deuxième luminaire, et l'exécution d'une ou de plusieurs des opérations suivantes :
l'affectation du premier et du deuxième luminaire à un même groupe de luminaires en réponse au fait qu'au moins un nombre prédéfini desdits aspects de similarité indique une similarité entre la série chronologique timeDurationForQCL respective de valeurs de capteur obtenues pour le premier luminaire et la série chronologique correspondante de valeurs de capteur obtenues pour le deuxième luminaire,
l'affectation du premier et du deuxième luminaire à des groupes de luminaires distincts en réponse au fait que moins que ledit nombre prédéfini desdits aspects de similarité indique une similarité entre la série chronologique respective de valeurs de capteur obtenues pour le premier luminaire et la série chronologique correspondante de valeurs de capteur obtenues pour le deuxième luminaire.

10. Procédé selon l'une quelconque des revendications 6 à 8, dans lequel ledit regroupement comprend, pour les luminaires affectés à au moins une des deux classes prédéfinies de luminaires ou plus :
l'application d'un modèle de mise en grappes afin de préaffecter les luminaires affectés à une classe respective de luminaires à une ou plusieurs grappes respectives en se basant sur lesdits un ou plusieurs aspects de similarité, et
l'affectation des luminaires affectés auxdites une ou plusieurs grappes respectives à un ou plusieurs groupes de luminaires.

11. Programme informatique (317) pour commander le rendement lumineux d'un luminaire (120-k), ce programme informatique (317) comprenant un code de programme lisible par ordinateur configuré de façon à causer l'exécution d'au moins le procédé selon l'une quelconque des revendications 1 à 10 lorsque ledit code de programme est exécuté sur un ou plusieurs appareils informatiques (300) .

12. Appareil (102, 103, 110-k, 300) comprenant un moyen d'analyse pour classer une pluralité de luminaires (120) en se basant sur des données de capteur respectives capturées à des emplacements respectifs de la pluralité de luminaires (120) qui sont disposés de façon à éclairer une pluralité d'espaces, ce moyen d'analyse étant agencé de façon à :
obtenir les données de capteur respectives pour la pluralité de luminaires (120), ces données de capteur respectives pour chaque luminaire (120) comprenant une ou plusieurs séries chronologiques respectives de valeurs de capteur qui représentent chacune une caractéristique environnementale respective à l'emplacement respectif de ladite pluralité d'espaces comme une fonction du temps pour un luminaire respectif parmi la pluralité de luminaires (120),
affecter au moins un luminaire parmi la pluralité de luminaires (120) à une de deux classes prédéfinies de luminaires ou plus en se basant sur la variation des valeurs de capteur dans la ou les séries chronologiques respectives de valeurs de capteur dans les données de capteur obtenues pour le luminaire respectif (120), **caractérisé en ce que** le moyen d'analyse est agencé de façon à exécuter ladite affectation en
déduisant, pour chaque luminaire parmi la pluralité de luminaires (120), en se basant sur au moins une série chronologique de valeurs de capteur dans les données de capteur obtenues pour le luminaire respectif (120-k), un paramètre de taux de changement respectif qui est descriptif d'un taux de changement de valeurs de capteur dans ladite au moins une série chronologique de valeurs de capteur, et en
affectant au moins un luminaire parmi la pluralité de luminaires (120) à une desdites deux classes prédéfinies de luminaires ou plus en se basant sur le paramètre de taux de changement déduit pour le luminaire respectif parmi la pluralité de luminaires (120),
lesdites une ou plusieurs séries chronologiques de valeurs de capteur comprises dans les données de capteur obtenues à partir du luminaire respectif (120-k) représentant au moins une des caractéristiques environnementales suivantes : le niveau de dioxyde de carbone, le composé organique volatil respectif, VOC, le niveau pour un ou plusieurs composés VOC, l'humidié, la pression de l'air.
